# EUROPEAN PATENT SPECIFICATION

(11) **EP 3 877 247 B1**
(45) Date of publication and mention of the grant of the patent: **14.02.2024**
(21) Application number: 19812846.4
(22) Date of filing: 04.11.2019
(51) Int. Cl.: B62J 17/00, B62D 35/00, B62D 37/02, B62K 5/027, B62K 5/05, B62K 5/08, B62K 5/10

(54) **SADDLE RIDE-TYPE MOTOR VEHICLE COMPRISING AN ACTIVE AERODYNAMIC DEVICE**
SATTELFAHRZEUG MIT AKTIVER AERODYNAMISCHER VORRICHTUNG
VÉHICULE AUTOMOBILE DE TYPE À CONDUITE SUR SELLE COMPRENANT UN DISPOSITIF AÉRODYNAMIQUE ACTIF

(30) Priority: 05.11.2018 IT 201800010029
(43) Date of publication of application: 15.09.2021
(73) Proprietor: Piaggio & C. SpA, 56025 Pontedera (IT)
(72) Inventor: SANTUCCI, Mario Donato, 56025 Pontedera (Pisa) (IT); DI TANNA, Onorino, 56025 Pontedera (Pisa) (IT); MARIOTTI, Valentino, 56025 Pontedera (Pisa) (IT)
(74) Representative: Carangelo, Pierluigi
(86) International application number: PCT/IB2019/059430
(87) International publication number: WO 2020/095166

(56) References cited:
- WO-A1-2018/183962
- JP-A- H05 170 157
- US-A- 3 815 696
- US-A1- 2009 171 530
- US-A1- 2016 016 623

## Description

### TECHNICAL FIELD

The present invention relates to the field of three-wheeled motor vehicles provided with a rideable saddle, such as for example motorcycles and scooters, but also to so-called rolling motor vehicles, i.e. provided with a rolling movement about a midplane which develops longitudinally along the vehicle. Three-wheel rolling motor vehicles may comprise two front steering wheels and a rear driving wheel, having a fixed axle. The rolling movement allows the motor vehicle to be inclined during the driving, for example when driving along a curve.

### BACKGROUND ART

The application of aerodynamic appendages is known in the vehicle sector. In particular, the appendages in four-wheel vehicles such as automobiles commonly have the shape of a wing or baffle and are applied to the front axle or rear axle, but also to the intermediate side portion. The main object of such appendages is generating an aerodynamic load on the wheels, for example to improve the grip, stability and traction thereof. An example are Formula One cars provided with a spoiler on the rear. In addition to the above, such appendages may also serve the purpose of conveying the air in order to cool specific parts of the motor which are subject to overheating.

Aerodynamic appendages arranged in the front portion and exposed to the flow of wind during driving to generate a load on the front wheel are also known in the field of motor vehicles, such as motorcycles and scooters.

The aerodynamic appendages in motor vehicles are commonly static, i.e. fixed during driving. Said aerodynamic appendages are for example, monolithic with the fairing of the motor vehicle or are applied thereto with fastening elements.

In other types, such appendages are adjustable in position, i.e. the inclination thereof for example may be adjusted in order to optimize the function thereof according to the route to be driven. Also, if they are of adjustable type, the wings of this type always have a static configuration during the motion, i.e. the inclination of the wings can only be modified when the motor vehicle is stationary.

The static position of the wings results in certain drawbacks. Under certain driving dynamics, the aerodynamic load generated by the wings may be disadvantageous. For example, the load is unfavorable in a change in direction between a first and a second opposite curve because it contrasts the realignment of the motor vehicle between the inclined position and the raised (standing) one, thus worsening the maneuverability of the motor vehicle. Indeed, a lift effect would be ideal on the front wheel in such a case.

Thus, there is the need to make an aerodynamic device for a motor vehicle which allows the maneuverability of the motor vehicle to be improved under all driving conditions, in particular when entering a curve and exiting a curve.

The object of the present invention is to make a rolling saddle ride-type motor vehicle having a pair of front wheels, comprising an active aerodynamic device which allows the stability of the motor vehicle to be improved during driving. A saddle-type motor vehicle comprising an active aerodynamic device, according to the preamble of claim 1, is known from US 2009/171530 A1.

### SUMMARY OF THE INVENTION

To overcome or alleviate one or more of the drawbacks of the current art, an active aerodynamic device is proposed for a saddle ride-type motor vehicle having a pair of front wheels and comprising at least a wing arranged in a front portion (or front axle) of the motor vehicle so as to be flowed by an air flow during a forward movement of the motor vehicle, and actuation means configured to move said at least a wing about a rotational axis substantially perpendicular to the midplane of the motor vehicle. Thereby, each wing is dynamically movable and adjustable in order to promote the stability and/or the maneuverability of the motor vehicle during driving. In other words, the actuation means of the wing allow the driver, or an automatic control system, to move and configure the wing under particular driving conditions, for example to promote entering a curve or changing direction or again, to contrast undesired imbalances of the motor vehicle, for example due to external causes such as the wind or the conformation of the ground, in order to resume stability. The movement of the wing indeed allows a lift or downforce effect to be dynamically created on the front wheel, thus adapting to the various driving conditions. The expression "motor vehicle" later means a motor vehicle, preferably a motorcycle or moped, of the saddle ride-type, rolling and with a pair of front wheels.

From a constructional viewpoint, said active aerodynamic device advantageously assumes three configurations by varying the inclination of the at least a wing: a rest configuration, a first active configuration and a second active configuration. In particular, said first active configuration is such to generate a vehicle roll torque toward a side of the vehicle and said second active configuration is such as to generate a vehicle roll torque toward the opposite side. These torques allow the vehicle to enter a curve more quickly and/or the vehicle to exit the curve more quickly, thus speeding up entering the steering inclination or exiting the steering inclination. Alternatively, these torques allow the motor vehicle to be stabilized upon a sudden imbalance effect.

There are preferably two wings and they are arranged on opposite sides of the motor vehicle with respect to the midplane. Even more preferably, said wings are cantileverly and swiveling connected to the fairing of the motor vehicle so that the roll torque generated by the wings has a preset arm which is evidently greater than zero.

In particular, each of said wings, or blade, comprises a leading edge and a trailing edge, opposite to said leading edge, arranged so that the air flow flows over said wing from said leading edge to said trailing edge. When said wing is in a neutral position, said leading edge and trailing edge lie on a reference plane passing through the rotational axis and substantially parallel to the ground. When said wing is in a raised position or in a lowered position, said leading edge and said trailing edge are mutually misaligned and arranged on opposite sides with respect to said reference plane. In particular, in said raised position said at least a wing has the trailing edge arranged above the leading edge, and in said lowered position said at least a wing has the trailing edge arranged below the leading edge, when the vehicle is observed in a standing position from the front. The wings are actively movable and in said raised and lowered positions, create a lift or a downforce, i.e. a vertical upward or downward thrust capable of varying the attitude of the vehicle. Clearly, also all the other intermediate positions differing from the first and second active configuration are defined.

Even more specifically, said active aerodynamic device may comprise a single wing. Here, the resting configuration of the device is obtained when the wing is in neutral position. The first active configuration, i.e. the one which generates a first roll torque, instead is obtained when the wing is in raised position. Contrarily, the second active configuration, i.e. the one which generates a roll torque which is opposed to the one generated in the first active configuration, is obtained when the wing is in lowered position. The direction of the roll torque is a function of the side of the vehicle on which the single wing is installed. If the wing is installed on the right-hand side of the vehicle, a roll torque in clockwise direction is caused in raised position, i.e. to the right, and vice versa if the wing is in lowered position. Instead, if the wing is installed on the left-hand side of the vehicle and is in raised position, a roll torque in anticlockwise direction is caused, i.e. to the left, and vice versa if the wing is in lowered position.

The same effect, but more pronounced, is obtained with two wings each arranged on opposite sides of the vehicle with respect to the midplane. In particular, in the first active configuration of the motor vehicle, the first wing is in raised position and the second wing is in lowered position, thus overall causing a roll torque in one direction. Assuming that the first wing is installed on the right-hand side of the motor vehicle and the second wing on the left-hand side, a roll torque in clockwise direction is generated about the longitudinal axis of the motor vehicle, i.e. a torque which tilts the motor vehicle to the right. Vice versa, in the second active configuration, the first wing is in lowered position and the second wing is in raised position, thus overall causing a roll torque in an opposite direction. Assuming as before, that the first wing is installed on the right-hand side of the motor vehicle and the second wing on the left-hand side, a roll torque in anticlockwise direction is generated about the longitudinal axis of the motor vehicle, i.e. a torque which tilts the motor vehicle to the left. In resting configuration, the device may be preset to generate a lift effect (lightning) of the front axle of the motor vehicle, a downforce effect (lowering) of the front axle of the motor vehicle, or a neutral behavior, i.e. as though the motor vehicle did not have said aerodynamic device installed. As known in aerodynamics, by positioning the wing in raised position, a downward thrust (downforce) is created which is typical of Formula One spoilers; vice versa, by positioning the wing in lowered position, an upward thrust (lift) is created which is typical of the flaps of aircraft in landing stage.

The expression "raised position" means a wing which has a trailing edge or outlet edge arranged above the leading edge or inlet edge. The expression "lowered position" means a wing which has a trailing edge or outlet edge arranged below the leading edge or inlet edge. Said definitions leave aside the shape of the longitudinal section of the wing, which may have the typical drop shape: symmetrical, asymmetrical rounded at the top and with the outlet edge downward, or asymmetrical rounded at the bottom and with the outlet edge upward.

Said actuation means of the wings preferably are functionally connected to a control unit configured to command said actuation means according to the steering angle, the rolling angle and the vehicle speed. Said control unit in particular is configured so as to vary the rolling speed of the vehicle, thus generating a roll torque toward one of the two sides of the vehicle. A control unit adapted to select the entity of the roll torque according to dynamic vehicle parameters, in particular dynamic curve setting parameters, allows entering a curve or exiting a curve to be optimized. Thereby, the control unit allows the inclination of the at least a wing to be adjusted. Due to the control unit, the inclination of the wings may be adjusted to also generate a downforce effect, which tends to lower the front wheel, or a lift effect, which tends to raise the front wheel. The possibility of adjusting this effect during driving allows the maneuverability of the motor vehicle to be increased, especially in the changes of direction and when entering, driving through and exiting a curve.

In a preferred embodiment, a first wing and a second wing prepared on opposite sides of the vehicle with respect to said front portion of the motor vehicle, are provided. Here, each of said wings has its own actuator configured to move said wings about said rotational axis. The rotational axis may be single and horizontal for both wings. Alternatively, said rotational axis may be of each wing and be slightly inclined downward or upward. The expression "substantially perpendicular to the midplane of the vehicle" means an axis perpendicular or inclined by +/-20° with respect to the perpendicular direction, i.e. the orthogonal direction leaving from said midplane. Said "midplane" is the longitudinal and vertical plane passing through the middle of a motor vehicle arranged in standing position, which divides the vehicle in standing position substantially in symmetrical manner into a right-hand portion and a left-hand portion.

In a particular version, said wings may be protected from impacts by a support element connected to the fairing of the motor vehicle.

Said actuation means, and in particular said actuators, are controlled by at least a switch connected thereto. Said switch allows selecting the position of each wing among said neutral, raised and lowered positions. The switch in particular may be a button arranged on a handlebar of the motor vehicle or a pedal arranged on an intermediate platform of the motor vehicle. There may be one switch for each wing; here, so they may be arranged on opposite sides of the motor vehicle with respect to the midplane, for example to the right and to the left, respectively, on the handlebar. Alternatively, there may be one switch for selecting the cycle and aerodynamic attitude preferred by the driver.

Instruments available in the market may be used to effectively measure said control unit input parameters to calculate the roll torque required in order to vary the rolling speed in desired manner. In any case, it is preferable to use a linear or rotary potentiometer to measure the steering angle, a gyroscope or an inertial platform to measure the rolling angle, one or more sensorized phonic wheels to measure the forward movement speed of the motor vehicle. The variation of the rolling speed may stabilize the vehicle in case of anomalous roll variations, compensating for the external force which alters the roll, for example a cross wind or uneven ground. Alternatively, said variation of the rolling speed may improve the maneuverability, thus promoting the roll movement desired by the driver.

Additionally, said device may comprise a torsiometer for measuring a steering torque applied by the driver to the handlebar of the motor vehicle. Here, the control unit is configured to predict the steering angle according to said steering torque. Said steering angle may be derived from the steering torque. Thereby, by measuring the steering torque, the wings may be actuated and then moved in advance of the steering inclination of the vehicle for the curve. In other words, by detecting the steering torque, the system provides the setting for the wings to take on in order to take the curve effectively. Since the steering torque is the one to induce the variation effect of the steering angle, it identifies the maneuver required to set the curve in advance. Thus, with this detection, the pairs of wings may be moved significantly beforehand with respect to the maneuver itself, generating the aforesaid variation of roll speed on the motor vehicle. The steering torque measured may preferably be a counter-steering torque, i.e. steering rotation in direction opposite to the direction of the curve to be taken with the motor vehicle.

It is the object of the present invention to provide a saddle ride-type motor vehicle with a pair of front wheels comprising an active aerodynamic device as described above because the above-described effect of facilitating entering or exiting a curve mainly occurs in a vehicle capable of rolling in pronounced manner and in particular in a vehicle requiring external forces in order to stay balanced.

Said motor vehicle preferably may comprise a pair of lateral deflectors arranged on opposite sides of the motor vehicle to laterally deflect the air flow which is generated when the motor vehicle advances. These deflectors increase the comfort for the driver, especially when the motor vehicle is a scooter and the air turbulences are to be diverted as much as possible from the area behind the front shield, i.e. close to the area of the footrest.

Further advantageous features and embodiments of the active aerodynamic device, and of the motor vehicle comprising it, are shown later and defined in the appended claims which form an integral part of the present description.

### BRIEF DESCRIPTION OF THE DRAWINGS

The invention will be better understood by following the description and the accompanying drawings, which show a non-limiting embodiment of the invention. More specifically, the drawings show:
Fig. 1 is a side view of a motor vehicle comprising an active aerodynamic device according to the present invention, with a wing in neutral position;
Fig. 2 is a side view of a motor vehicle comprising an active aerodynamic device according to the present invention, with a wing in raised position;
Fig. 3 is a side view of a motor vehicle comprising an active aerodynamic device according to the present invention, with a wing in lowered position;
Fig. 4 is an axonometric perspective view of a motor vehicle comprising an active aerodynamic device according to the present invention, in resting configuration;
Fig. 5 is a front view of a motor vehicle comprising an active aerodynamic device according to the present invention, in resting configuration with both wings in neutral position;
Fig. 6 is a front view of a motor vehicle comprising an active aerodynamic device according to the present invention, in resting configuration with both wings in raised position;
Fig. 7 is a front view of a motor vehicle comprising an active aerodynamic device according to the present invention, in resting configuration with both wings in lowered position;
Fig. 8 is a front view of a motor vehicle comprising an active aerodynamic device according to the present invention, in a first active configuration with a raised first wing and a lowered second wing;
Fig. 9 is a front view of a motor vehicle comprising an active aerodynamic device according to the present invention, in a second active configuration with a raised second wing and a lowered first wing;
Figures 10A, 10B and 10C are a top diagrammatic view of a motor vehicle comprising an active aerodynamic device according to the present invention, in the various steps of driving through a curve;
Fig. 11 is a top diagrammatic view of a motor vehicle comprising an active aerodynamic device according to the present invention, in the various steps of driving through a double curve.

### DETAILED DESCRIPTION

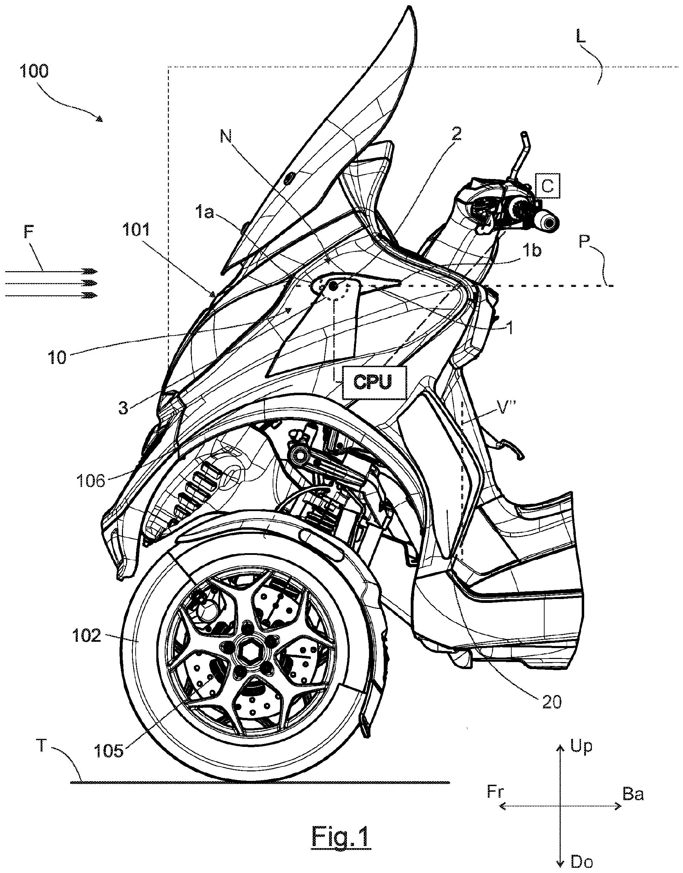

With reference to figures 1 to 9, an active aerodynamic device 10 installed on a motor vehicle 100 is shown. The motor vehicle 100 shown is according to the invention of the rolling type with a pair of front wheels 102.

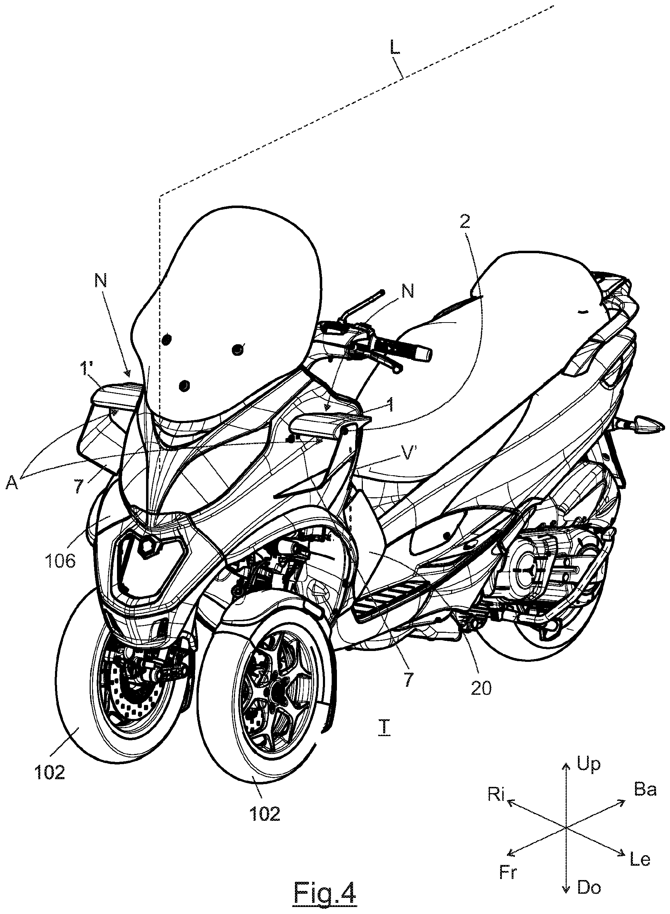

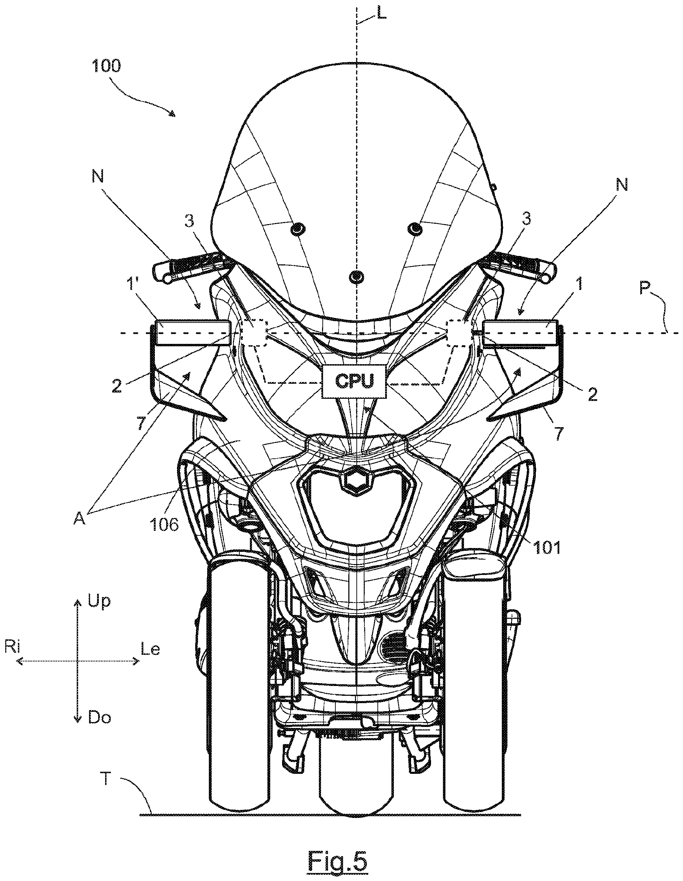

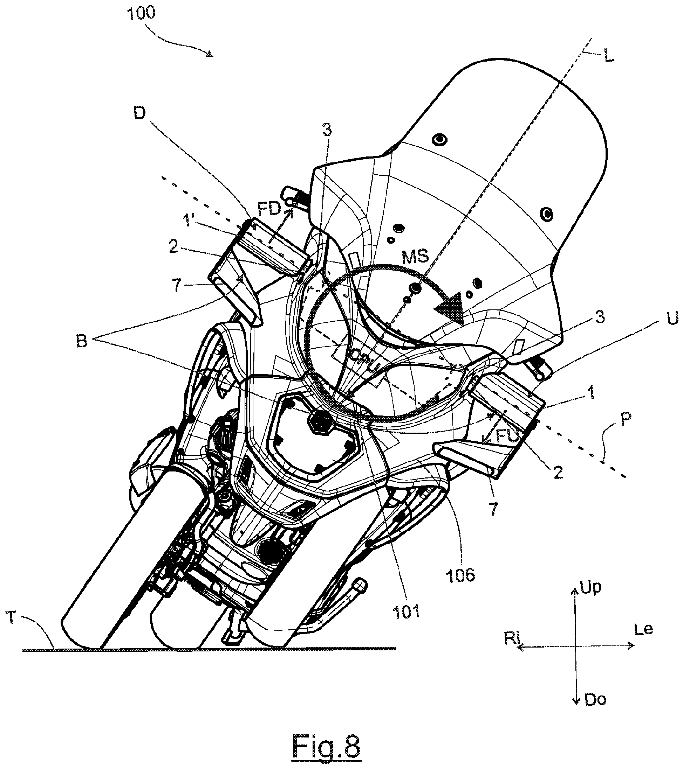

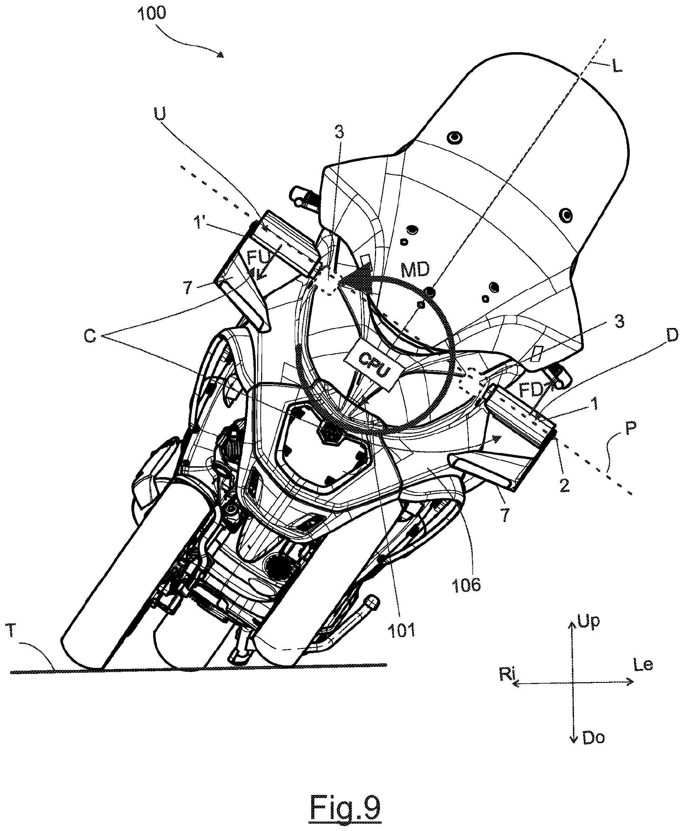

The aerodynamic device 10 comprises at least a wing 1 arranged on a front portion 101 of the motor vehicle 100 so as to be exposed to an air current during the motion. Actuation means 3 are also provided, adapted to selectively move wing 1 about a rotational axis 2. In the drawings, the rotational axis is depicted horizontal, i.e. parallel to ground T, when the vehicle is in standing position, as shown in figures 1 to 9. Said rotational axis 2 is perpendicular to the longitudinal midplane L of the motor vehicle 100. Thereby, mainly the following can be identified: a rest configuration A, shown in Figures 4 and 5, in which wing 1 is exposed neutrally to the air flow F so as to keep the attitude of the vehicle unchanged; a first active configuration B, shown in Fig. 8, in which the wings are in counter-phase with each other, i.e. one raised and the other lowered, so as to generate, due to the air flow F, a rolling momentum of the motor vehicle 100, and therefore a variation of the rolling speed in the motor vehicle 100, as better clarified later in the text; a second active configuration C, shown in Fig. 9, in which the wings are in counter-phase with each other, i.e. one raised and the other lowered, so as to generate, due to the air flow F, a different rolling momentum of the motor vehicle 100, and therefore a variation of the rolling speed in the motor vehicle 100, as better clarified later in the text.

From a constructional viewpoint, wing 1 comprises a leading edge or inlet edge 1a and a trailing edge or outlet edge 1b, opposite to the leading edge 1a, which are defined with respect to the direction of the wind flow F. Wing 1 is mounted on the front axle of the motor vehicle 100 so that during the driving, the air current F flows over wing 1 with a direction that goes from the leading edge 1a toward the trailing edge 1b. It may be assumed that the direction of the air flow F substantially is horizontal to vehicle 100 when driving.

As shown in Figures 1 to 3, the wings have a tapered drop-shaped profile characterized by an enlarged inlet edge 1a and a tapered outlet edge 1b. In the drawings, the profile is symmetrical with respect to the plane passing through the leading 1a and trailing 1b edges. Said wing profile may also take on a different shape according to the aerodynamic effect desired.

In particular, as shown in Fig. 1, the leading edge 1a and the trailing edge 1b of wing 1 are substantially aligned with each other and both lie on a reference plane P passing through the rotational axis 2 of wing 1. Reference plane P is substantially parallel to ground T when the motor vehicle 100 is in standing position. Wing 1 therefore takes on a position called neutral N (Fig. 1).

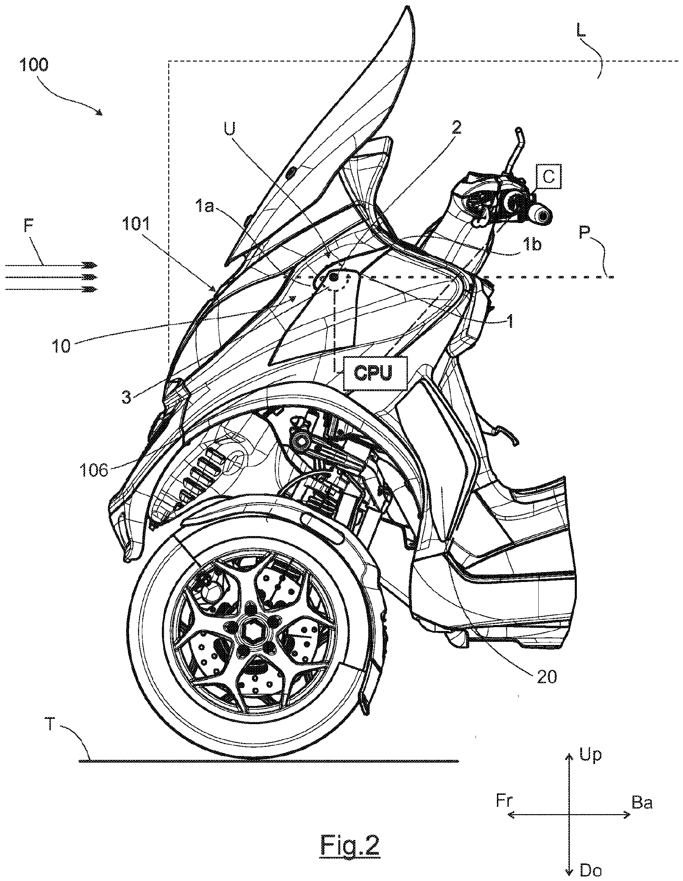

In a first operating position of wing 1 called raised U, shown in Fig. 2, the leading edge 1a and the trailing edge 1b are substantially offset from each other with respect to reference plane P. The trailing edge 1b is above reference plane P, while the leading edge 1a is below reference plane P.

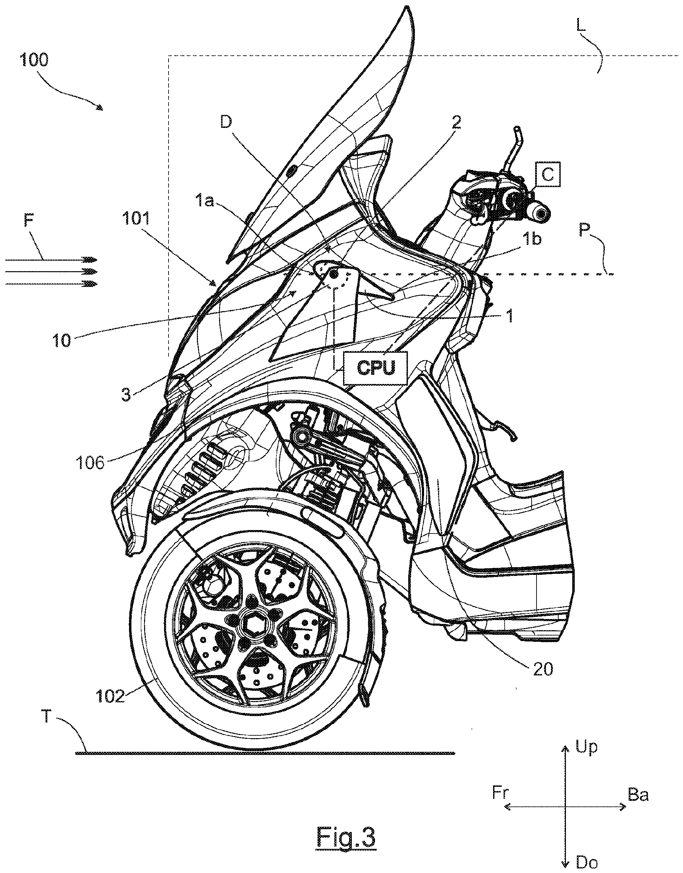

In a second operating position of wing 1 called lowered D, shown in Fig. 3, the leading edge 1a and the trailing edge 1b are substantially offset from each other with respect to reference plane P. The trailing edge 1b is below reference plane P, while the leading edge 1a is above reference plane P.

Wing 1 may take on all the intermediate angular positions between these raised U and lowered D positions due to the actuation of the actuation means 3.

When there are two wings, as shown in Figures 4 to 9, each of said wings 1, 1' may take on any position between said raised position U and said lowered position D. Here, the wings lie on opposite sides of the vehicle and are cantileverly connected with respect to fairing 106 of the vehicle. The first wing 1 in particular is connected to the left-hand side of the motor vehicle 100, while the second wing 1' is connected to the right-hand side of the motor vehicle 100.

As shown in Figures 4 and 5, the rest configuration A of the motor vehicle 100 is obtained when both wings are in neutral position. In this configuration, the wings 1, 1' do not provide any aerodynamic contribution to the vehicle and conduct themselves in neutral manner with respect to the air flow F. Thereby, the ratio between the aerodynamic coefficient (Cx) and the lift coefficient (Cx) is the smallest possible.

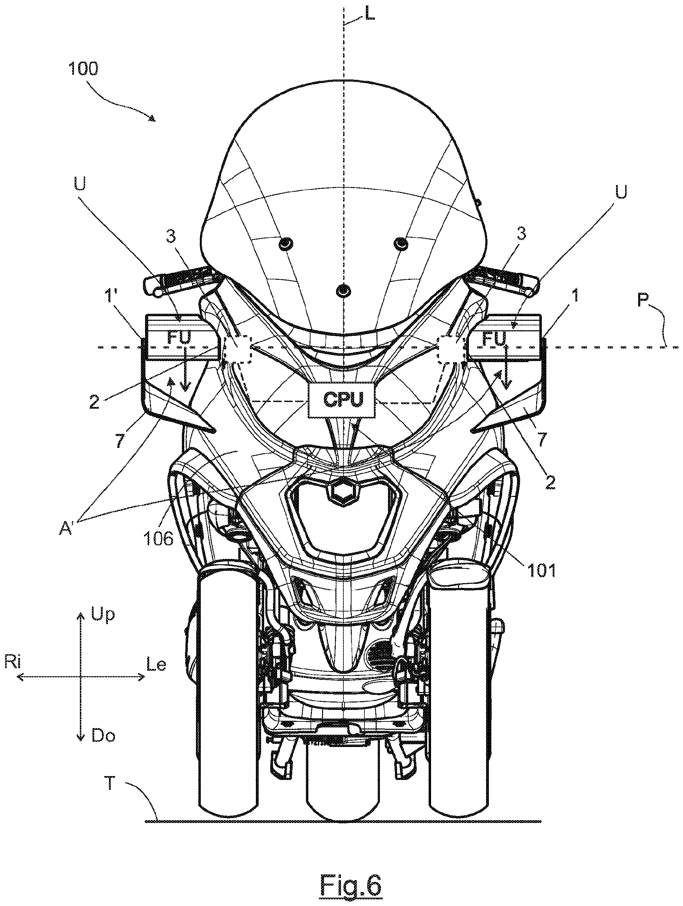

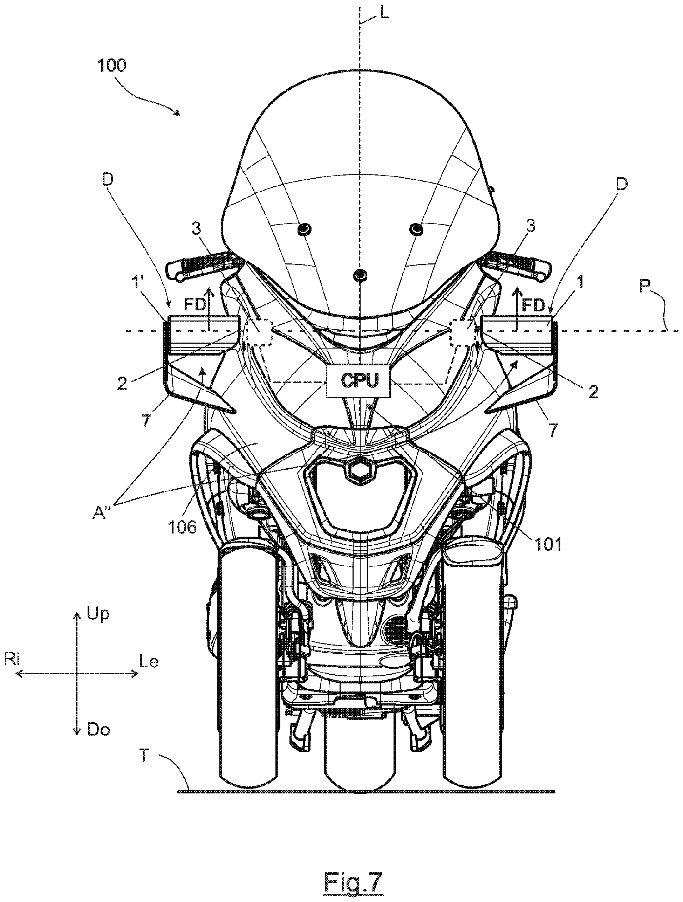

Further rest configurations A' and A" are possible, as shown in Figures 6 and 7. In Fig. 7, both wings in particular 1, 1' are positioned raised U and therefore a downforce of front axle 101 is created which results in a preload on the front part 101 of the motor vehicle 100. With reference instead to Fig. 8, both wings 1, 1' are positioned lowered D and therefore a lift is created which implies a lightening on the front part 101 of the motor vehicle 100. These rest configurations A' (both wings 1, 1'raised U-U) and A" (both wings 1, 1' lowered D-D) preferably are with respect to the neutral rest configuration A if there is a desire to provide a preload or a lightning of the front axle of the motor vehicle 100.

With reference now to Fig. 8, the wings 1, 1' are arranged in counter-phase, i.e. the first wing 1 is positioned raised U, while the second wing 1' is positioned lowered D. This particular positioning of the wings 1, 1' results in an upward thrust FD resulting from the second wing 1' and a downward thrust FU resulting from the first wing 1. The effects of said thrusts FD, FU are nullified along the vertical axis but create a rolling momentum MS to the left, i.e. in anticlockwise direction about the longitudinal axis of the motor vehicle, i.e. when the axis is oriented from back Ba to front Fr of the motor vehicle 100.

In an alternative version (not shown) of the active aerodynamic device shown in Fig. 8, both wings 1, 1' are lowered but with different scales with respect to reference plane P (wing 1' is lowered more than wing 1). Thereby, the results of the thrusts created by the air flow F impacting the wings 1, 1' has an upward direction (lightning of front axle 101) and a roll torque MS to the left is simultaneously created. In a further alternative version (not shown) of the active aerodynamic device shown in Fig. 8, both wings 1, 1' are raised but with different scales with respect to reference plane P (wing 1 is raised more than wing 1'). Thereby, the results of the thrusts created by the air flow F impacting the wings 1, 1' has a downward direction (load of front axle 101) and a roll torque MS to the left is simultaneously created.

With reference now to Fig. 9, the wings 1, 1' are arranged in counter-phase, i.e. the first wing 1 is positioned lowered D, while the second wing 1' is positioned raised U. This particular positioning of the wings 1, 1' results in an upward thrust FD resulting from the first wing 1 and a downward thrust FU resulting from the second wing 1'. The effects of said thrusts FD, FU are nullified along the vertical axis but create a momentum MD to the right, i.e. in clockwise direction about the longitudinal axis of the motor vehicle when it is oriented from back Ba to front Fr of the motor vehicle 100.

In an alternative version (not shown) of the active aerodynamic device shown in Fig. 9, both wings 1, 1' are lowered but with different scales with respect to reference plane P (wing 1 is lowered more than wing 1'). Thereby, the results of the thrusts created by the air flow F impacting the wings 1, 1' has an upward direction (lightning of front axle 101) and a roll torque MD to the right is simultaneously created. In a further alternative version (not shown) of the active aerodynamic device shown in Fig. 8, both wings 1, 1' are raised but with different scales with respect to reference plane P (wing 1' is raised more than wing 1). Thereby, the results of the thrusts created by the air flow F impacting the wings 1, 1' has a downward direction (load of front axle 101) and a roll torque MD to the right is simultaneously created.

The downward thrusts are thrusts which create a compression load of the front axle 101, while the upward thrusts are thrusts which create a discharge of the front axle 101, these thrusts normally being indicated with the abbreviation "Cz". The upward Cz increases the maneuverability of the front axle 101 and therefore the maneuverability of the motor vehicle 100. The downward Cz causes an improved grip of the front axle 101 to ground T.

The wings 1, 1' are rotatable about the rotational axis 2 by an angle preferably equal to +/- 25° with respect to the direction of reference plane P (horizontal to the ground).

Said momentum or roll torque MD, MS is important for increasing the maneuverability of the motor vehicle 100, in particular in a step of entering or exiting a curve, as is described more clearly later.

Each wing 1, 1' comprises a support element 7 mounted on the outer side of said wing 1, 1'. The support element 7 allows the cantilevered side of the wing to be supported, thus making it more stable. The support element 7 in particular comprises a portion which extends between the axis of wing 2 and the fairing of the front portion 101 of the motor vehicle 100. The portion may be simply rested in the fairing area thus creating a support, or it is firmly fastened thereto with fastening means.

More specifically, the support element 7 as an "L"-shaped profile oriented toward the fairing of the motor vehicle 100 so as to define a channel for conveying the air flow with the respective wing 1, 1' and the fairing.

From a functional viewpoint, the actuation means 3 diagrammatically shown in Figures 1 to 3, 5 to 9 comprise two actuators 3 for moving each wing 1, 1' between said neutral N, raised U and lowered D positions. Said actuators preferably are electric motors.

Said actuation means or actuators 3 are connected to a switch C (diagrammatically depicted in Figures 1 to 3), such as a button.

Said device 10 preferably comprises a first and second actuator 3 which actuate the first 1 and second 1' wing, respectively, and said actuators 3 are functionally connected to a control unit CPU. The control unit CPU is programmed to selectively move the first 1 and second 1' wing and, in particular, to select the rotation angle of said wings about the rotational axis 2 with respect to reference plane P. The angle of the wings 1, 1' with respect to reference plane P, and therefore the resulting roll torque are an output calculated by the control unit CPU according to the steering angle, the rolling angle, and the vehicle speed. Thereby by varying the roll torque, the rolling speed of the vehicle may be varied, i.e. the roll inclination of the vehicle may be made quicker, in particular when it has to enter a curve or exit a curve. Thereby, the motor vehicle 100 goes from the standing position to the steering inclination position and vice versa in a significantly quicker manner. This effect is particularly perceivable at speeds of the motor vehicle 100 exceeding 50 km/h.

Said steering angle, i.e. the angle between the steering axis and the frame, preferably is measured by means of a linear or rotary potentiometer. The steering angle is equal to zero when the motor vehicle is standing and the wheels are parallel to each other.

A steering torque applied to the handlebar of the motor vehicle 100 may advantageously be detected, for example by means of a torsiometer. Said steering angle may be derived from the steering torque. Thereby by measuring the steering torque, the wings 1, 1' may be actuated and then moved in advance with respect to the steering inclination of the vehicle for the curve. In other words, by detecting the steering torque, the system anticipates the control of the driver for setting the curve. Since the steering torque is the one to induce the variation effect of the steering angle, it identifies, in advance, the methods of the motor vehicle taking the curve. Thus, with this detection, the pairs of wings may be moved substantially in advance with respect to the maneuver itself, thus generating the aforesaid variation of roll speed on the motor vehicle 100.

Said rolling angle preferably is measured by means of a gyroscope associated with the control unit CPU or with an inertial platform connected to the control unit CPU. The rolling angle equal to zero indicates the standing position of the motor vehicle 100.

The forward movement speed preferably is measured by means of phonic wheels 105 (Fig. 1) conveniently equipped with phonic wheel sensors. Said sensorized phonic wheels may be arranged on the front wheels and/or on the rear wheel of the motor vehicle 100.

According to the operating principle, the variation of the rolling speed may stabilize the vehicle in case of anomalous roll variations, compensating for the external force which alters the roll, for example a wind transverse to the motor vehicle or uneven ground. Alternatively, said variation of the rolling speed may improve the maneuverability, thus promoting the roll movement desired by the driver.

Said saddle ride-type 100 motor vehicle 100 may comprise said active aerodynamic device. As shown in Figures 1 to 4, said motor vehicle 100 may further comprise a pair of lateral deflectors 20 positioned on the front portion 101 of the motor vehicle 100. Said deflectors 20 are configured to laterally deflect the air flow F and may be movable, based on the forward movement speed of the motor vehicle 100, to laterally and adjustably deflect - past the motor vehicle 100 - the air flow F which encounters the advancing motor vehicle itself. By laterally deflecting the air flow F, the driver perceives less turbulence in the area behind the shield of front axle 101 and the drive is more stable when the speeds are greater than 50 km/h. As shown in Figs. 1 and 4, said deflectors 20 are hinged to the vehicle 100 with substantially vertical hinges, i.e. having axes V ', V' ' parallel to the midplane L of the vehicle 100. Said deflectors 20 can be hinged to the vehicle 100 frontally, that is to say in their most advanced portion, to improve the deviation of the air laterally. Alternatively, the deflectors 20 are hinged to the vehicle 100 at the rear, that is to say in the rearmost portion thereof, so as to generate an aerodynamic effect braking the vehicle 100 when at least one of said deflectors 20 is open laterally. To obtain both effects, the deflectors 20 can be hinged to the vehicle 100 in an intermediate position thereof, so as to produce a braking or deflecting effect according to the angle of incidence of the deflector 20 with respect to the fairing 106 of the vehicle 100. There are two deflectors 20 and they are arranged on opposite sides of the vehicle 100. Said deflectors are preferably independently motorized and connected to said control unit to manage the deflecting or braking effect. The control of the deflectors 20 can be supplied by the driver. Said control can be an output signal to a switch C positioned on the handlebar of the vehicle 100. Said deflectors 20 can be present on the vehicle regardless of said at least one fin 1, 1 '. Said saddle riding motorvehicle 100 can therefore comprise movable deflectors 20 actuated independently of one another and arranged on opposite sides of the vehicle 100, hinged to the vehicle 100 by means of hinges having axes V ', V" substantially parallel to midplane L of the motor vehicle 100.

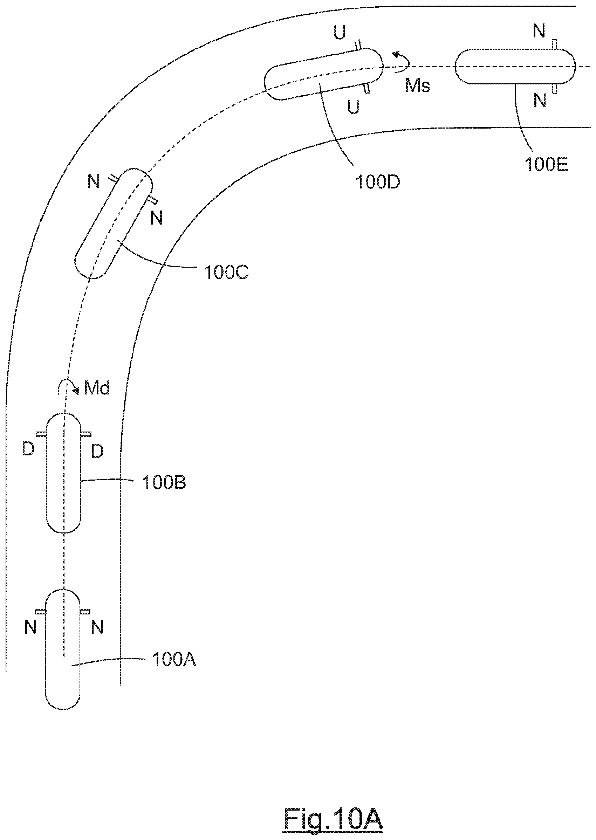

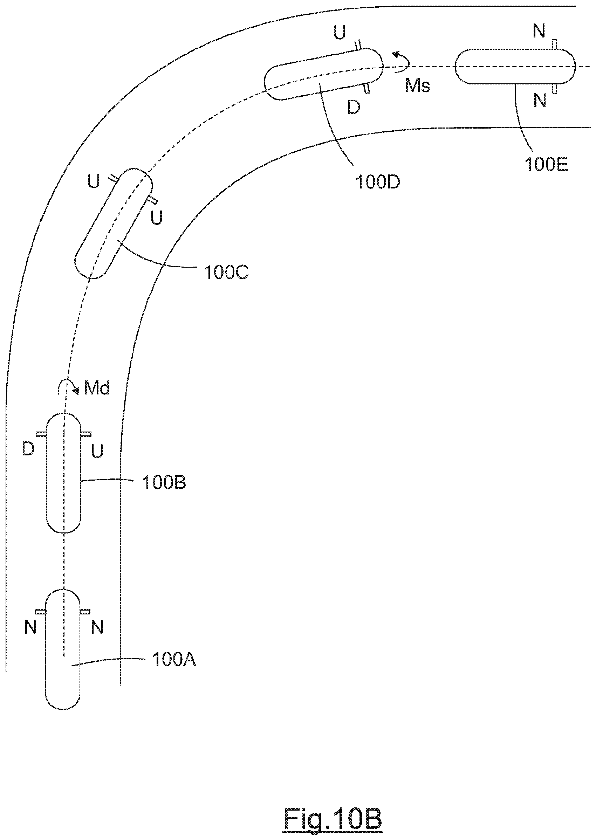

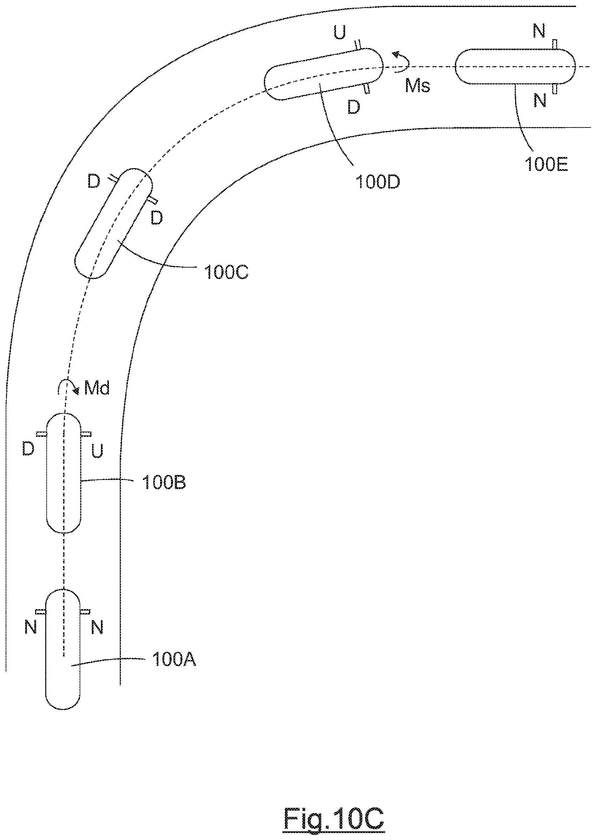

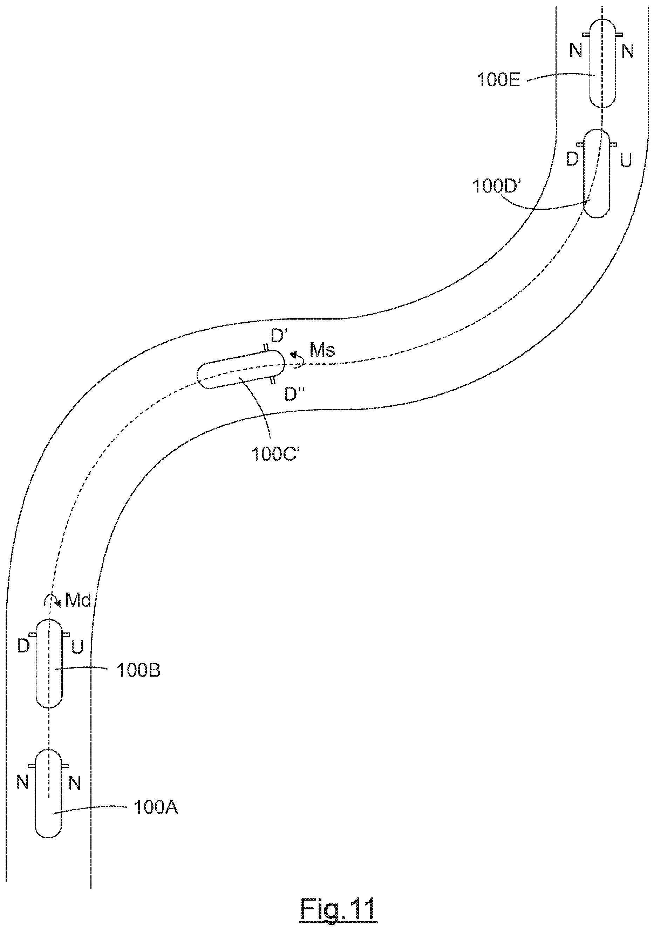

For a better comprehension of the innovative features of the various embodiments of the aerodynamic device according to the present invention and of the related motor vehicle, conceptual diagrams showing the configurations and the effects of the aerodynamic device are shown after the diagrams of concrete embodiments of the aerodynamic device and of the related motor vehicle using it. Such simplified diagrams to which reference is made are shown in figures 10 and 11.

As shown in diagrammatic drawings 10 and 11, a motor vehicle 100A initially drives a straight line with both wings in neutral position N-N. In a particular version (not shown), the wings could both be raised U or both be lowered D to obtain predefined conduct of the motor vehicle also when driving in a straight line.

When the motor vehicle (position 100B) has to start setting the curve to the right (in Figures 10 and 11), the left-hand wing is arranged in lowered position D and the right-hand wing is arranged in raised position U by means of the actuation of the first and second actuator. In this manner, a rolling momentum MD to the right is created and the motorcycle takes on the steering inclination to take the curve in an easier and quicker manner. It is useful to note that a rolling motor vehicle of the type described in the present invention may not take a curve unless it is inclined to the inner side of the curve, due to the centrifugal force acting on the motor vehicle and on the driver thereof.

Once the motor vehicle (position 100C) has set the curve, the attitude of the wings may return to neutral position N-N (Fig. 10A). Alternatively, the attitude of the wings may be set so that both wings are raised U-U (Fig. 10B) in order to further load the front axle of the motor vehicle, for example if the driver is about to brake or to increase the grip of the front axle. In a further alternative, the attitude of the wings may be set so that both wings are lowered D-D (Fig. 10C) in order to further lighten the front axle of the motor vehicle, for example if the motor vehicle is about to face a sudden change in path.

A particular case of this latter hypothesis is depicted in Fig. 11, where the vehicle drives along a series of opposite curves arranged in sequence. Here, when changing direction of the motor vehicle from one curve to the next (position 100C'), it may be preferable to significantly lighten the front axle of the motor vehicle to allow the driver to exert the least effort possible to change direction. This results in decidedly improved timing for changing direction. Here, when the motor vehicle 100C' is between the two curves, it is preferable to position both wings lowered D'-D" but with the right-hand one D" inclined downward more than the left-hand wing D', so as to have a carrying effect of the front axle (lifting front axle) and a roll torque MD to the left adapted to tip over the motor vehicle from the opposite side.

When the motor vehicle (position 100D) is instead about to exit the curve to face a straight line, the motor vehicle requires a torque to quickly return to standing position (Fig. 10). Here, the right-hand wing is arranged in lowered position D and the left-hand one in raised position U, thus generating a roll torque MS to the left adapted to straighten the motor vehicle. The process in Figure 11 is the same but reverse given that the motor vehicle (position 100D') is to be straightened after a curve to the left. Therefore, the right-hand wing is raised U and the left-hand one lowered D.

Once the motor vehicle is in the straight stretch again, the wings may both be positioned in neutral position N-N (position 100E in Figures 10 and 11).

It is apparent that the variation of the aerodynamic forces for varying the lift or downforce effect depends on various factors and circumstances, such as the type of vehicle, ground conditions, speed etc. However, as a general principle, it is advantageous to generate a torque which facilitates entering a curve and a torque which facilitates exiting the curve or a change of direction.

Those skilled in the art, with the object of meeting contingent and specific needs, can make several changes and variants to the solutions described above, as long as they remain within the scope of the invention, which is defined by the following claims.

## Claims

1. Saddle ride-type motor vehicle (100) comprising an active aerodynamic device (10) in turn comprising:
- at least a wing (1,1') arranged in a front portion (101) of the motor vehicle (100) so to be flowed by an air flow (F) during a forward movement of the motor vehicle (100);
- - actuation means (3) configured to move said at least a wing (1,1') about a rotational axis (2) perpendicular to a midplane (L) of the motor vehicle (100), said at least a wing (1,1') being integral with said motor vehicle (100) in its rolling movements, **characterised in that** the saddle ride-type motor vehicle (100) is a rolling type motor vehicle with a pair of front wheels (102).

2. Motor vehicle (100) according to claim 1, wherein said aerodynamic device is configured to assume a rest configuration (A,A',A''), a first active configuration (B) and a second active configuration (C), varying the inclination of said at least a wing (1,1'); said first active configuration (B) generating a roll torque (MS) toward a first side of the vehicle (100) and said second active configuration (C) generating a roll torque (MD) toward a second side of the vehicle (100), in particular comprising a first wing (1) and a second wing (1') arranged on opposite sides of the motor vehicle (100) with respect to said midplane (L).

3. Motor vehicle (100) according to the previous claim, wherein said wings (1,1') are cantileverly and swiveling connected to a fairing (106) of the motor vehicle (100).

4. Motor vehicle (100) according to any one of the previous claims, wherein said at least a wing (1,1') comprises a leading edge (1a) and a trailing edge (1b), opposite to said leading edge (1a), arranged so that said air flow (F) flows over said wing (1,1') from said leading edge (1a) to said trailing edge (1b), and wherein when said at least a wing (1,1') is in a neutral position (N) said leading edge (1a) and said trailing edge (1b) lie on a reference plane (P) passing through said rotational axis (2) and substantially parallel to the ground, and wherein when said at least a wing (1,1') is in a raised position (U) or in a lowered position (D) said leading edge (1a) and said trailing edge (1b) are misaligned among them and arranged on opposite sides with respect to said reference plane (P), in particular wherein in said raised position (U) said at least a wing (1,1') appears with a trailing edge (1b) arranged above the trailing edge (1a), and in said lowered position (D) said at least a wing (1,1') appears with a trailing edge (1b) arranged below the leading edge (1a), when said vehicle is observed in a standing position.

5. Motor vehicle (100) according to claim 4, wherein when said device (10) comprises a first wing (1) and a second wing (1'), said device (10) is:
- in rest configuration (A,A',A") when both said wings (1,1') are in the neutral position (N) or both in the raised position (U) or both in the lowered position (D);
- in said first active configuration (B) when said first wing (1) is in the raised position (U) and said second wing (1') is in the lowered position (D);
- in said second active configuration (C) when said first wing (1) is in the lowered position (D) and said second wing (1') is in the raised position (U).

6. Motor vehicle (100) according to any of claims 2 to 5, wherein said actuation means (3) are operatively connected to a control unit (CPU) adapted to command said actuation means (3) as a function of a steering angle, a rolling angle and a vehicle speed so to change a rolling speed of the vehicle generating said rolling torque (MS) toward the first side of the vehicle or said rolling torque (MD) toward the second side of the vehicle, in particular wherein said actuation means (3) comprise a first and second actuator configured to respectively move said first (1) and second (1') wing.

7. Motor vehicle (100) according to any of claims 4 to 6 in a version not dependent on claim 3, wherein said at least a wing (1,1') comprises a support element (7) connected to said fairing (106) and configured to protect said at least a wing (1,1').

8. Motor vehicle (100) according to claims 4 or 5, wherein the actuation means (3) are connected to at least a switch (C) configured to select the position of said at least a wing (1,1') between said neutral position (N), raised position (U) and lowered position (D).

9. Motor vehicle (100) according to the previous claim, wherein said at least a switch (C) is selected between a button arranged on the handlebar of the motor vehicle (100) or a pedal arranged on an intermediate platform of the motor vehicle (100).

10. Motor vehicle (100) according to claim 6, comprising a linear or rotary potentiometer for measuring said steering angle.

11. Motor vehicle (100) according to claim 6, comprising a gyroscope or an inertial platform for measuring said rolling angle.

12. Motor vehicle (100) according to claim 6, comprising one or more sensorized phonic wheels for measuring said speed of the motor vehicle (100).

13. Motor vehicle (100) according to claim 6, comprising a torsiometer for measuring a steering torque; said control unit (CPU) being configured to predict the steering angle as a function of the steering torque.

14. Motor vehicle (100) according to any one of the previous claims, comprising a couple of lateral deflectors (20) arranged on opposite sides of the motor vehicle (100) and configured to deflect the airflow (F) laterally.

15. Motor vehicle (100) according to claim 4 and to any one of claims 8 to 14, in a version of not being dependent on any of claims 2, 3, 5 and 6, wherein when said device (10) comprises a single wing (1,1'), said device (10) is:
- in rest configuration (A) when said wing (1) is in neutral position (N);
- in said first active configuration (B) when said wing (1) is in the raised position (U);
- in said second active configuration (C) when said wing (1) is in the lowered position (D).

## Patentansprüche

1. Sattelfahrzeug (100) mit aktiver aerodynamischer Vorrichtung (10), mit wiederum:
- mindestens einem Flügel (1, 1'), der in einem vorderen Abschnitt (101) des Fahrzeugs (100) so angeordnet ist, dass er während einer Vorwärtsbewegung des Fahrzeugs (100) von einem Luftstrom (F) umströmt wird;
- Betätigungsmittel (3), die so konfiguriert sind, dass sie den mindestens einen Flügel (1, 1') um eine Drehachse (2) senkrecht zu einer Mittelebene (L) des Fahrzeugs (100) bewegen, wobei der mindestens eine Flügel (1, 1') einstückig mit dem Fahrzeug (100) bei seinen Rollbewegungen ist, **dadurch gekennzeichnet, dass**
das Sattelfahrzeug (100) ein Rollfahrzeug mit einem Paar von Vorderrädern (102) ist.

2. Fahrzeug (100) nach Anspruch 1, wobei die aerodynamische Vorrichtung so konfiguriert ist, dass sie eine Ruhekonfiguration (A, A', A"), eine erste aktive Konfiguration (B) und eine zweite aktive Konfiguration (C) annimmt, wodurch die Neigung des mindestens einen Flügels (1, 1') variiert wird; wobei die erste aktive Konfiguration (B) ein Rollmoment (MS) zu einer ersten Seite des Fahrzeugs (100) hin erzeugt und die zweite aktive Konfiguration (C) ein Rollmoment (MD) zu einer zweiten Seite des Fahrzeugs (100) hin erzeugt, insbesondere umfassend einen ersten Flügel (1) und einen zweiten Flügel (1'), die auf gegenüberliegenden Seiten des Fahrzeugs (100) in Bezug auf die Mittelebene (L) angeordnet sind.

3. Fahrzeug (100) nach dem vorhergehenden Anspruch, wobei die Flügel (1, 1') freitragend und schwenkbar mit einer Verkleidung (106) des Fahrzeugs (100) verbunden sind.

4. Fahrzeug (100) nach einem der vorhergehenden Ansprüche, wobei der mindestens eine Flügel (1, 1') eine Vorderkante (1a) und eine Hinterkante (1b) umfasst, die der Vorderkante (1a) gegenüberliegt, so angeordnet, dass der Fluss (F) über den Flügel (1, 1') von der Vorderkante (1a) zu der Hinterkante (1b) fließt, und wobei, wenn der mindestens eine Flügel (1, 1') in einer neutralen Position (N) ist, die Vorderkante (1a) und die Hinterkante (1b) auf einer Referenzebene (P) liegen, die durch die Drehachse (2) und im Wesentlichen parallel zum Boden verläuft, und wobei, wenn sich der mindestens eine Flügel (1, 1') in einer angehobenen Position (U) oder in einer abgesenkten Position (D) befindet, die Vorderkante (1a) und die Hinterkante (1b) untereinander versetzt und auf gegenüberliegenden Seiten in Bezug auf die Bezugsebene (P) angeordnet sind, insbesondere wobei in der angehobenen Position (U) der mindestens eine Flügel (1, 1') mit einer Hinterkante (1b) erscheint, die oberhalb der Hinterkante (1a) angeordnet ist, und in der abgesenkten Position (D) der mindestens eine Flügel (1, 1') mit einer Hinterkante (1b) erscheint, die unterhalb der Vorderkante (1a) angeordnet ist, wenn das Fahrzeug in einer stehenden Position beobachtet wird.

5. Fahrzeug (100) nach Anspruch 4, wobei, wenn die Vorrichtung (10) einen ersten Flügel (1) und einen zweiten Flügel (1') umfasst, sich die Vorrichtung (10):
- in der Ruhekonfiguration (A, A', A") befindet, wenn beide Flügel (1, 1') in der neutralen Position (N) oder beide in der angehobenen Position (U) oder beide in der abgesenkten Position (D) befinden;
- in der ersten aktiven Konfiguration (B) befindet, wenn sich der erste Flügel (1) in der angehobenen Position (U) und der zweite Flügel (1') in der abgesenkten Position (D) befindet;
- in der zweiten aktiven Konfiguration (C) befindet, wenn sich der erste Flügel (1) in der abgesenkten Position (D) und der zweite Flügel (1') in der angehobenen Position (U) befindet.

6. Fahrzeug (100) nach einem der Ansprüche 2 bis 5, wobei die Betätigungsmittel (3) betriebsmäßig mit einer Steuereinheit (CPU) verbunden sind, die betreibbar ist, um die Betätigungsmittel (3) als eine Funktion eines Lenkwinkels, eines Rollwinkels und einer Fahrzeuggeschwindigkeit zu steuern, um eine Rollgeschwindigkeit des Fahrzeugs zu ändern, die das Rollmoment (MS) zu der ersten Seite des Fahrzeugs hin oder das Rollmoment (MD) zu der zweiten Seite des Fahrzeugs hin erzeugt, insbesondere wobei die Betätigungsmittel (3) einen ersten und einen zweiten Aktuator umfassen, die konfiguriert sind, um den ersten (1) bzw. den zweiten (1') Flügel zu bewegen.

7. Fahrzeug (100) nach einem der Ansprüche 4 bis 6 in einer von Anspruch 3 unabhängigen Version, wobei der mindestens eine Flügel (1, 1') ein Stützelement (7) umfasst, das mit der Verkleidung (106) verbunden ist und dazu konfiguriert ist, den mindestens einen Flügel (1, 1') zu schützen.

8. Fahrzeug (100) nach Anspruch 4 oder 5, wobei die Betätigungsmittel (3) mit mindestens einem Schalter (C) verbunden sind, der so konfiguriert ist, dass er die Position des mindestens einen Flügels (1, 1') zwischen der neutralen Position (N), der angehobenen Position (U) und der abgesenkten Position (D) auswählt.

9. Fahrzeug (100) nach dem vorhergehenden Anspruch, wobei der mindestens eine Schalter (C) zwischen einem an der Lenkstange des Fahrzeugs (100) angeordneten Knopf oder einem an einer Zwischenplattform des Fahrzeugs (100) angeordneten Pedal ausgewählt wird.

10. Fahrzeug (100) nach Anspruch 6, umfassend ein lineares oder rotierendes Potentiometer zur Messung des Lenkwinkels.

11. Fahrzeug (100) nach Anspruch 6, umfassend ein Gyroskop oder eine Inertialplattform zur Messung des Rollwinkels.

12. Fahrzeug (100) nach Anspruch 6, umfassend ein oder mehrere sensorisierte phonische Räder zur Messung der Geschwindigkeit des Fahrzeugs (100).

13. Fahrzeug (100) nach Anspruch 6, umfassend ein Torsiometer zur Messung eines Lenkmoments; wobei die Steuereinheit (CPU) so konfiguriert ist, dass sie den Lenkwinkel als eine Funktion des Lenkmoments vorhersagt.

14. Fahrzeug (100) nach einem der vorhergehenden Ansprüche, umfassend ein Paar seitlicher Deflektoren (20), die auf gegenüberliegenden Seiten des Fahrzeugs (100) angeordnet und so konfiguriert sind, dass sie den Luftstrom (F) seitlich ablenken.

15. Fahrzeug (100) nach Anspruch 4 und nach einem der Ansprüche 8 bis 14 in einer von den Ansprüchen 2, 3, 5 und 6 unabhängigen Version, wobei, wenn die Vorrichtung (10) einen einzelnen Flügel (1, 1') umfasst, sich die Vorrichtung (10):
- in der Ruhekonfiguration (A) befindet, wenn sich der Flügel (1) in der neutralen Position (N) befindet;
- in der ersten aktiven Konfiguration (B) befindet, wenn sich der Flügel (1) in der angehobenen Position (U) befindet;
- in der zweiten aktiven Konfiguration (C) befindet, wenn sich der Flügel (1) in der abgesenkten Position (D) befindet.

## Revendications

1. Véhicule automobile de type à conduite sur selle (100) comprenant un dispositif aérodynamique actif (10) comprenant lui-même :
- au moins une aile (1, 1') disposée dans une partie avant (101) du véhicule automobile (100) afin d'être parcourue par un flux d'air (F) lors d'un mouvement vers l'avant du véhicule automobile (100) ;
- des moyens d'actionnement (3) conçus pour déplacer ladite au moins une aile (1, 1') autour d'un axe de rotation (2) perpendiculaire à un plan médian (L) du véhicule automobile (100), ladite au moins une aile (1, 1') étant solidaire dudit véhicule automobile (100) dans ses mouvements de roulis, **caractérisé en ce que**
le véhicule automobile du type à conduite sur selle (100) est un véhicule automobile du type à roulis comportant une paire de roues avant (102).

2. Véhicule automobile (100) selon la revendication 1, dans lequel ledit dispositif aérodynamique est conçu pour adopter une configuration de repos (A, A', A"), une première configuration active (B) et une seconde configuration active (C), faisant varier l'inclinaison de ladite au moins une aile (1, 1') ; ladite première configuration active (B) générant un couple de roulis (MS) vers un premier côté du véhicule (100) et ladite seconde configuration active (C) générant un couple de roulis (MD) vers un second côté du véhicule (100), comprenant notamment une première aile (1) et une seconde aile (1') disposées sur des côtés opposés du véhicule automobile (100) par rapport audit plan médian (L).

3. Véhicule automobile (100) selon la revendication précédente, dans lequel lesdites ailes (1, 1') sont reliées en porte-à-faux et par pivot à un carénage (106) du véhicule automobile (100).

4. Véhicule automobile (100) selon l'une quelconque des revendications précédentes, dans lequel ladite au moins une aile (1, 1') comprend un bord d'attaque (1a) et un bord de fuite (1b), opposé audit bord d'attaque (1a), disposés de sorte que ledit flux d'air (F) s'écoule sur ladite aile (1, 1') depuis ledit bord d'attaque (1a) jusqu'audit bord de fuite (1b) et dans lequel, lorsque ladite au moins une aile (1, 1') est en position neutre (N), ledit bord d'attaque (1a) et ledit bord de fuite (1b) se trouvent sur un plan de référence (P) passant par ledit axe de rotation (2) et sensiblement parallèles au sol et dans lequel, lorsque ladite au moins une aile (1, 1') est en position relevée (U) ou en position abaissée (D), ledit bord d'attaque (1a) et ledit bord de fuite (1b) sont mal alignés entre eux et disposés sur des côtés opposés par rapport audit plan de référence (P), en particulier dans lequel, dans ladite position relevée (U), ladite au moins une aile (1, 1') apparaît avec un bord de fuite (1b) disposé au-dessus du bord de fuite (1a) et, dans ladite position abaissée (D), ladite au moins une aile (1, 1') apparaît avec un bord de fuite (1b) disposé au-dessous du bord d'attaque (1a), lorsque ledit véhicule est observé en position redressée.

5. Véhicule automobile (100) selon la revendication 4, dans lequel, lorsque ledit dispositif (10) comprend une première aile (1) et une seconde aile (1'), ledit dispositif (10) est :
- en configuration de repos (A, A', A"), lorsque les deux ailes (1, 1') mentionnées sont en position neutre (N) ou en position relevée (U) ou en position abaissée (D) ;
- dans ladite première configuration active (B), lorsque ladite première aile (1) est en position relevée (U) et que ladite seconde aile (1') est en position abaissée (D) ;
- dans ladite seconde configuration active (C), lorsque ladite première aile (1) est en position abaissée (D) et que ladite seconde aile (1') est en position relevée (U).

6. Véhicule automobile (100) selon l'une quelconque des revendications 2 à 5, dans lequel lesdits moyens d'actionnement (3) sont reliés fonctionnellement à une unité de commande (CPU) adaptée pour commander lesdits moyens d'actionnement (3) en fonction d'un angle de braquage, d'un angle de roulis et d'une vitesse du véhicule pour modifier une vitesse de roulis du véhicule générant ledit couple de roulis (MS) vers le premier côté du véhicule ou ledit couple de roulis (MD) vers le second côté du véhicule, en particulier dans lequel lesdits moyens d'actionnement (3) comprennent un premier et un second actionneur conçus pour déplacer respectivement lesdites première (1) et seconde (1') ailes.

7. Véhicule automobile (100) selon l'une quelconque des revendications 4 à 6 dans une version non dépendante de la revendication 3, dans lequel ladite au moins une aile (1, 1') comprend un élément de soutien (7) relié audit carénage (106) et conçu pour protéger ladite au moins une aile (1, 1').

8. Véhicule automobile (100) selon les revendications 4 ou 5, dans lequel les moyens d'actionnement (3) sont reliés à au moins un interrupteur (C) conçu pour sélectionner la position de ladite au moins une aile (1, 1') entre lesdites position neutre (N), position relevée (U) et position abaissée (D).

9. Véhicule automobile (100) selon la revendication précédente, dans lequel ledit au moins un interrupteur (C) est choisi entre un bouton disposé sur le guidon du véhicule automobile (100) ou une pédale disposée sur une plateforme intermédiaire du véhicule automobile (100).

10. Véhicule automobile (100) selon la revendication 6, comprenant un potentiomètre linéaire ou rotatif permettant de mesurer ledit angle de braquage.

11. Véhicule automobile (100) selon la revendication 6, comprenant un gyroscope ou une plateforme inertielle permettant de mesurer ledit angle de roulis.

12. Véhicule automobile (100) selon la revendication 6, comprenant une ou plusieurs roues phoniques dotées de capteurs permettant de mesurer ladite vitesse du véhicule automobile (100).

13. Véhicule automobile (100) selon la revendication 6, comprenant un torsiomètre permettant de mesurer un couple de direction ; ladite unité de commande (CPU) étant configurée pour prédire l'angle de braquage en fonction du couple de direction.

14. Véhicule automobile (100) selon l'une quelconque des revendications précédentes, comprenant un couple de déflecteurs latéraux (20) disposés sur des côtés opposés du véhicule automobile (100) et conçus pour dévier latéralement le flux d'air (F).

15. Véhicule automobile (100) selon la revendication 4 et l'une quelconque des revendications 8 à 14, dans une version non dépendante de l'une quelconque des revendications 2, 3, 5 et 6, dans lequel, lorsque ledit dispositif (10) comprend une seule aile (1, 1'), ledit dispositif (10) est :
- en configuration de repos (A) lorsque ladite aile (1) est en position neutre (N) ;
- dans ladite première configuration active (B) lorsque ladite aile (1) est en position relevée (U) ;
- dans ladite seconde configuration active (C) lorsque ladite aile (1) est en position abaissée (D).
